# EUROPEAN PATENT SPECIFICATION

(11) **EP 3 139 099 B1**
(45) Date of publication and mention of the grant of the patent: **02.12.2020**
(21) Application number: 16177409.6
(22) Date of filing: 01.07.2016
(51) Int. Cl.: F24C 15/18, A47J 39/00

(54) **DRAWER, IN PARTICULAR A WARMING DRAWER**
SCHUBLADE, INSBESONDERE EINE WÄRMESCHUBLADE
TIROIR, EN PARTICULIER UN TIROIR CHAUFFANT

(30) Priority: 31.08.2015 SI 201500202
(43) Date of publication of application: 08.03.2017
(73) Proprietor: Gorenje d.d., 3503 Velenje (SI)
(72) Inventor: Stibor, Michal, 78353 Velka Bystrice (CZ)
(74) Representative: Ivancic, Bojan

(56) References cited:
- EP-A1- 2 225 972
- US-A- 6 166 353
- US-A1- 2006 278 629
- US-A1- 2013 319 995

## Description

The present invention relates to a drawer, in particular to a warming drawer with the household furniture and/or household apparatus such as an oven and similar, comprising a front panel which closes a container for goods to be stored in the drawer, said container consisting of a bottom, side walls and a back wall.

A drawer of the aforementioned kind has been disclosed by publication in EP 2 225 972 A1, US 6 166 353 A, US 2013/319995 A1 and US 2006/278629 A1. With the known drawers, a container is connected with a front panel by means of fixing screws projecting into a receiving space of the container. Said projecting screws represent considerable drawback since goods stored in the drawer may stuck therein, and even a user may gets injured.

It is the object of the present invention to create a new drawer, in particular a drawer with a household apparatus, which remedies drawbacks of the known solutions.

The object as set above is solved by features set forth in the characterizing part of claim 1. Thus, it is provided according to the present invention that a carrier plate rests with a surface thereof against a glass or wooden front panel and is attached to said front panel at the side facing the interior of a drawer, wherein a casing is arranged on the carrier plate at the side averted from the front panel. According to the invention, said carrier plate is formed at the side averted from a bottom with a fold which is spaced from the front panel, thus, creating a gap between the front panel and the carrier plate, the casing cooperating with said gap. Detail of the invention are further disclosed in the attached subclaims.

The invention will be more readily understood on reading the following description with reference to the accompanying drawings where
Fig. 1 a three dimensional view of a drawer,
Fig. 2 an exploded view of the drawer of Fig. 2,

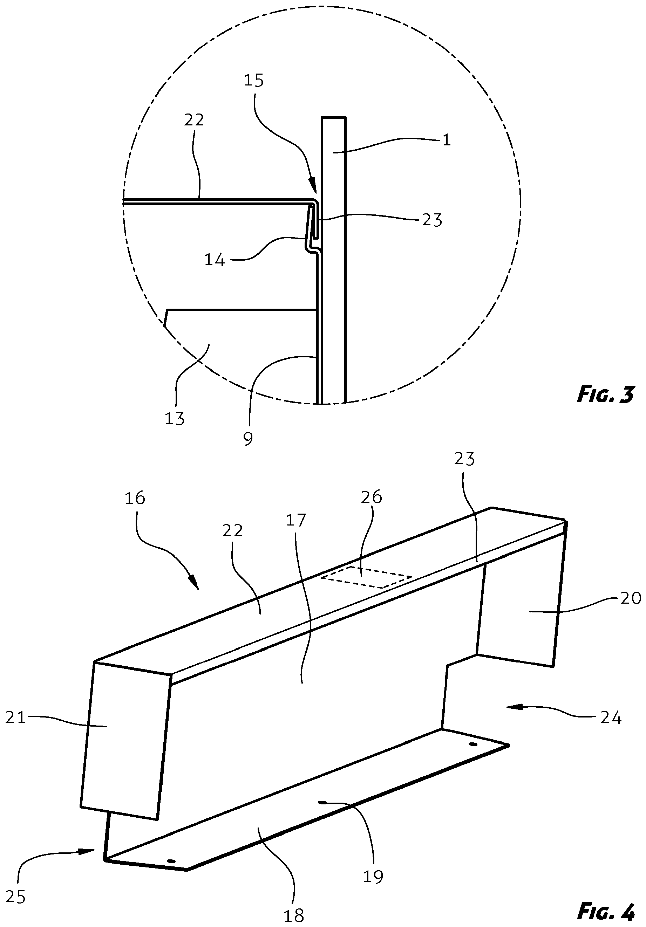

Fig. 3 a detail view **III** of fixation of the drawer of Fig. 1,
Fig. 4 a casing of the drawer according to the invention.

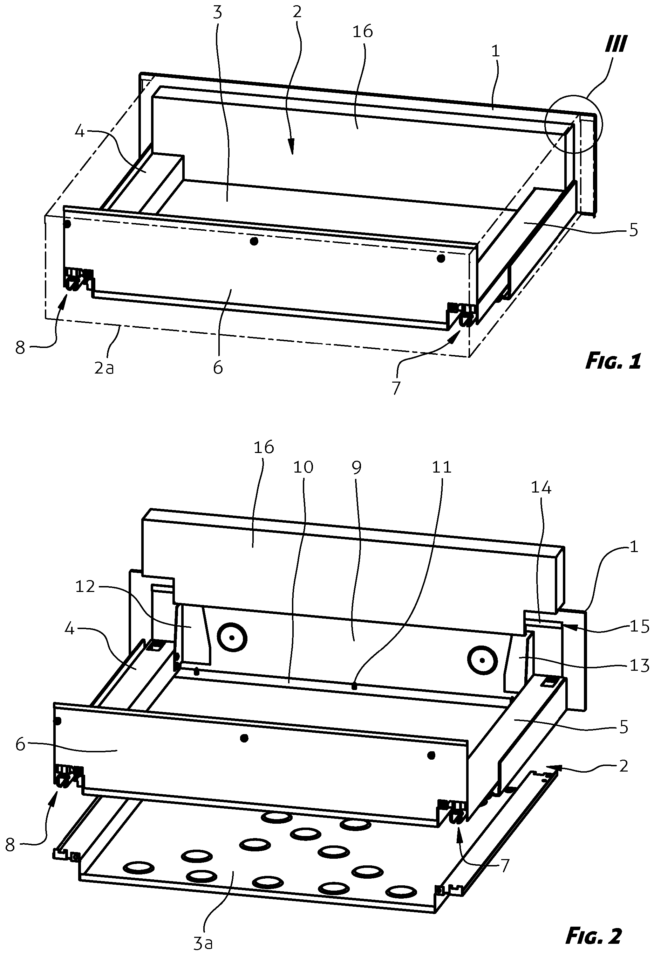

In continuation, an embodiment of a warming drawer with a household apparatus such as an oven is described in detail. The drawer according to the invention comprises a front panel 1 made of glass in the present embodiment, however, it can also be made of wood or any other suitable material. A container 2 is attached to said front panel 1, comprising a bottom 3, side wall 4, 5 and a back wall 6. The drawer comprising the front panel 1 and the container 2 is insertable into a receptacle 2a (in Fig. 1 shown as dash-dotted line), which can be placed either in a kitchen cabinet and/or an oven and/or similar. Said bottom 3 comprises at least an outer lower protective plate 3a and, optionally, a warming unit not shown, said warming unit being arranged between the bottom 3 and the protective plate 3a. A guide 7, 8 cooperating with a drawer receptacle, not shown, is attached to each side wall 4, 5. A carrier plate rests with a surface thereof against the front panel 1 and is also attached to the front panel 1 at the side facing the interior of the drawer, for instance by means of adhesive means. At the side of the bottom 3 and in the area between the side walls 4, 5, said carrier plate 9 is at least partially formed with a relatively narrow fold 10 which extends in parallel with the bottom 3 and, respectively, perpendicularly to the front panel 1. The protective plate 3a is held at the end thereof which faces the carrier plate 9 with said fold 10, in a locking manner for instance. Fixing means 11, such as screws for instance, extend through the protective plate 3a, said screws being screwed into the bottom 3 from the outside of the lower side of the drawer, so that the point thereof substantially extends in the interior of the drawer. In the connection area of each side wall 4, 5 and the carrier plate 9 the latter is formed with an L shaped beam 12, 13 to which each side wall 4, 5 is attached by means of fixing means, such as screws for instance. Furthermore, at the side averted from the bottom 3 said carrier plate 9 is formed over at least of the length thereof with a fold 14 which is spaced from the front panel 1. Therewith is created a gap 15 between the front panel 1 and the carrier plate 9, the purpose of said gap being described in the continuation.

According to the present invention it is provided that the free end of the carrier plate 9, i.e. the side averted from the front panel 1, is entirely covered by means of a thin-walled box-shaped casing 16. Said casing extends in the direction from the carrier plate 9 toward the back wall 6 in such an extent that it covers said fold 10 together with all fixing means 11 and possible cut-outs in the side walls 4, 5 of the drawer. The casing 16 comprises a vertical wall 17 being approximately in parallel with the carrier plate 9, side walls 20, 21 and the top wall 22. The casing 16 is formed at the side facing said bottom 3 of the drawer with a fold 18 extending in parallel with the bottom 3 and in the direction towards the carrier plate 9. Said fold 18 is formed with a plurality of through-holes 19 configured to cooperate with said fixing means 11. Said side wall 20, 21 of the casing 16 preferably fit said carrier plate 9.

The casing 16 is formed at the side averted from the bottom 3 and, respectively, from the fold 18 with a top wall 22 which comprises at the side facing the carrier plate 9 a holding fold 23 which extends approximately perpendicularly to the wall 22 and, respectively, approximately in parallel with the carrier plate 9. Said holding fold 23 is configured for cooperation with said gap 15 and is located in said gap 15 between the front panel 1 and said fold 14 of the carrier plate 9, when the casing 16 is installed.

Furthermore, the casing 16 is optionally formed in each lower corner section thereof with a cut-out 24, 25 into which a side wall 4, 5 is seated. Any sort of displacement of the casing 16 relative to the front panel 1 and, respectively, the carrier plate 9 is prevented by means of cooperation of the fold 23 and the gap 15, and by means of said fixing means 11.

According to the invention, the top wall 22 of the casing 16 is formed with a cut-out 26, where a display, a control and a regulation electronic unit can be placed. Said electronic control unit can be used to set the warming time and/or temperature in the drawer according to the invention.

## Claims

1. A drawer, in particular a warming drawer with the household furniture and/or household apparatus such as an oven and similar, comprising a container (2) for goods to be stored in the drawer, and a front panel (1) which closes the container, said container consisting of a 1 bottom (3), side walls (4, 5) and
a back wall (6), wherein at the side facing the interior of the drawer a carrier plate (9) rests with a surface thereof against and 1 is attached to the front panel (1), wherein a casing (16) is arranged on the carrier plate (9) at the side averted from the front panel (1),
**characterized in that**
the front panel is made of glass or wood, **in that** said carrier plate (9) : is formed at the side averted from the bottom (3) with a fold (14) which is spaced from the front panel (1), thus, creating a gap (15) between the front panel (1) and the carrier plate (9), said gap cooperating with the casing (16), wherein said casing (16) is formed at the side averted from a bottom (3) with a top wall (22) which at the side facing the carrier plate (9) comprises a holding fold (23) extending approximately in parallel with the carrier plate (9), said holding fold (23) being configured to cooperate with said gap (15) and wherein the top wall (22) of the casing (16) is formed with a cut-out (26) being configured to receive a display, a control unit and a regulation electronic unit.

2. A drawer according to claim 1, ***characterized in that*** said gap (15) cooperates with the casing (16) which extends in the direction from the carrier plate (9) toward a back wall (6) of the drawer in such an extent to cover a fold (10) together with all fixing means (11) and possible cut-outs in side walls (4, 5) of the drawer.

3. A drawer according to claims 1 to 2, ***characterized in that*** said casing (16) comprises a vertical wall (17) approximately in parallel with the carrier plate (9), side walls (20, 21) and a top wall (22).

4. A drawer according to any of the preceding claims, ***characterized in that*** the casing (16) is formed at the side facing the bottom (3) of the drawer with a fold (18) extending in parallel with the bottom (3) and in direction towards the carrier plate (9).

5. A drawer according to any of the preceding claims, ***characterized in that*** the casing (16) is optionally formed in each lower corner section with a cut-out (24, 25) into which the side wall is seated (4, 5).

6. A drawer according to claim 3, ***characterized in that*** said fold (14) extends at least partially in longitudinal direction of the carrier plate (9).

7. A drawer according to any of the preceding claims, ***characterized in that*** the casing (16) is formed as a thin-walled box-shaped casing.

8. A drawer according to any of the preceding claims, ***characterized in that*** the carrier plate (9) is attached to the front panel (1) by means of adhesive means.

## Patentansprüche

1. Schublade, insbesondere eine Wärmeschublade für Haushaltsmöbel und / oder Haushaltsgeräte, wie beispielsweise einen Ofen und ähnliches, die einen Behälter (2) für die in der Schublade aufzunehmenden Waren und eine Frontplatte (1) umfasst, die den Behälter schließt,
wobei der Behälter aus einem Boden (3), Seitenwänden (4,5) und einer Rückwand (6) besteht, wobei an der Seite, die zu dem Inneren der Schublade zeigt, eine Trägerplatte (9) mit ihrer Fläche dagegen ruht und an der Frontplatte (1) angebracht ist, wobei ein Gehäuse (16) an der Trägerplatte (9) an der Seite, die von der Frontplatte (1) abgewandt ist, angeordnet ist,
**dadurch gekennzeichnet, dass**
die Frontplatte aus Glas oder Holz hergestellt ist, und dass die Trägerplatte (9) an der Seite, die von dem Boden (3) abgewandt ist, mit einem Falz (14) ausgebildet ist, der von der Frontplatte (1) beabstandet ist, wodurch eine Lücke (15) zwischen der Frontplatte (1) und der Trägerplatte (9) erzeugt wird, wobei die Lücke mit dem Gehäuse (16) zusammenwirkt, wobei das Gehäuse (16) an der Seite, die von dem Boden (3) abgewandt ist, mit einer oberen Wand (22) ausgebildet ist, die an der Seite, die zu der Trägerplatte (9) zeigt, einen Haltefalz (23) umfasst, der sich ungefähr parallel zu der Trägerplatte (9) erstreckt, wobei der Haltefalz (23) darauf ausgelegt ist, mit der Lücke (15) zusammen zu wirken und wobei die obere Wand (22) des Gehäuses (16) mit einem Ausschnitt (26) ausgebildet ist, der darauf ausgelegt ist, eine Anzeige, eine Steuereinheit und eine elektronische Regeleinheit aufzunehmen.

2. Schublade gemäß Anspruch 1, **dadurch gekennzeichnet, dass** die Lücke (15) mit dem Gehäuse (16) zusammenwirkt, das sich in die Richtung von der Trägerplatte (9) zu einer Rückwand (6) der Schublade in einem solchen Ausmaß erstreckt, um einen Falz (10) zusammen mit allen Befestigungsmitteln (11) und möglichen Ausschnitten in Seitenwänden (4,5) der Schublade abzudecken.

3. Schublade gemäß den Ansprüchen 1 bis 2, **dadurch gekennzeichnet, dass** das Gehäuse (16) eine vertikale Wand (17), die ungefähr parallel zu der Trägerplatte (9) ist, Seitenwände (20,21) und eine obere Wand (22) umfasst.

4. Schublade gemäß einem der vorangehenden Ansprüche, **dadurch gekennzeichnet, dass** das Gehäuse (16) an der Seite, die zu dem Boden (3) der Schublade zeigt, mit einem Falz (18) ausgebildet ist, der sich parallel zu dem Boden (3) und in Richtung zu der Trägerplatte (9) erstreckt.

5. Schublade gemäß einem der vorangehenden Ansprüche, **dadurch gekennzeichnet, dass** das Gehäuse (16) optional in jedem unteren Eckabschnitt mit einem Ausschnitt (24,25) ausgebildet ist, in den die Seitenwand (4,5) gesetzt ist.

6. Schublade gemäß Anspruch 3, **dadurch gekennzeichnet, dass** der Falz (14) sich zumindest teilweise in longitudinaler Richtung der Trägerplatte (9) erstreckt.

7. Schublade gemäß einem der vorangehenden Ansprüche, **dadurch gekennzeichnet, dass** das Gehäuse (16) als ein dünnwandiges boxförmiges Gehäuse ausgebildet ist.

8. Schublade gemäß einem der vorangehenden Ansprüche, **dadurch gekennzeichnet, dass** die Trägerplatte (9) mittels eines Klebemittels an der Frontplatte (1) angebracht ist.

## Revendications

1. Tiroir, en particulier un tiroir chauffant pour le meuble de maison et/ou l'appareil ménager tel qu'un four ou analogue, comprenant un récipient (2) pour des articles devant être stockés dans le tiroir, et un panneau avant (1) qui ferme le récipient, ledit récipient étant constitué d'un fond (3), de parois latérales (4, 5) et d'une paroi arrière (6), dans lequel une plaque de support (9), au niveau du côté faisant face à l'intérieur du tiroir, repose, avec une surface de celle-ci, contre et est fixée au panneau avant (1), un boîtier (16) étant agencé sur la plaque de support (9) au niveau du côté écarté du panneau avant (1),
**caractérisé par le fait que**
le panneau avant est fait de verre ou de bois, et **par le fait que**
ladite plaque de support (9) comporte, au niveau du côté écarté du fond (3), une pliure (14) qui est espacée du panneau avant (1), créant ainsi un intervalle (15) entre le panneau avant (1) et la plaque de support (9), ledit intervalle coopérant avec le boîtier (16), ledit boîtier (16) comportant, au niveau du côté écarté d'un fond (3), une paroi supérieure (22) qui, au niveau du côté faisant face à la plaque de support (9), comprend une pliure de maintien (23) s'étendant approximativement parallèlement à la plaque de support (9), ladite pliure de maintien (23) étant configurée pour coopérer avec ledit intervalle (15), et la paroi supérieure (22) du boîtier (16) comportant une découpe (26) configurée pour recevoir un dispositif d'affichage, une unité de commande et une unité électronique de régulation.

2. Tiroir selon la revendication 1, **caractérisé par le fait que** ledit intervalle (15) coopère avec le boîtier (16) qui s'étend dans la direction allant de la plaque de support (9) vers une paroi arrière (6) du tiroir de façon à recouvrir une pliure (10) conjointement avec tous les moyens de fixation (11) et éventuelles découpes dans des parois latérales (4, 5) du tiroir.

3. Tiroir selon les revendications 1 à 2, **caractérisé par le fait que** ledit boîtier (16) comprend une paroi verticale (17) approximativement parallèle à la plaque de support (9), des parois latérales (20, 21) et une paroi supérieure (22).

4. Tiroir selon l'une quelconque des revendications précédentes, **caractérisé par le fait que** le boîtier (16) comporte, au niveau du côté faisant face au fond (3) du tiroir, une pliure (18) s'étendant parallèlement au fond (3) et en direction de la plaque de support (9).

5. Tiroir selon l'une quelconque des revendications précédentes, **caractérisé par le fait que** le boîtier (16) comporte facultativement, dans chaque section de coin inférieur, une découpe (24, 25) dans laquelle la paroi latérale (4, 5) prend appui.

6. Tiroir selon la revendication 3, **caractérisé par le fait que** ladite pliure (14) s'étend au moins partiellement dans une direction longitudinale de la plaque de support (9).

7. Tiroir selon l'une quelconque des revendications précédentes, **caractérisé par le fait que** le boîtier (16) se présente sous la forme d'un boîtier en forme de boîte à parois minces.

8. Tiroir selon l'une quelconque des revendications précédentes, **caractérisé par le fait que** la plaque de support (9) est fixée au panneau avant (1) à l'aide de moyens adhésifs.
